# EUROPÄISCHE PATENTANMELDUNG

(11) **EP 3 712 724 A1**
(43) Veröffentlichungstag der Anmeldung: **23.09.2020**
(21) Anmeldenummer: 20164639.5
(22) Anmeldetag: 20.03.2020
(51) Int. Cl.: G05B 19/05

(54) **AUTOMATISIERUNGSANORDNUNG, VERFAHREN ZUM BETRIEB DER AUTOMATISIERUNGSANORDNUNG SOWIE COMPUTERPROGRAMM**

(30) Priorität: 22.03.2019 DE 102019203921
(71) Anmelder: ZF Friedrichshafen AG, 88046 Friedrichshafen (DE)
(72) Erfinder: Wolf, Alexander, 88079 Kressbronn (DE); Raiser, Christian, 88069 Tettnang (DE); Mutter, Alexander, 88693 Deggenhausertal (DE)

(57) **Zusammenfassung**

Es ist eine Aufgabe der vorliegenden Erfindung, eine Automatisierungsanordnung vorzuschlagen, welche eine verbesserte Qualität umsetzt. Hierzu wird eine Automatisierungsanordnung 1 mit einer speicherprogrammierbaren Steuerung 5 zur Steuerung einer Automatisierungsanlage 2, wobei die speicherprogrammierbare Steuerung 5 ein Steuermodul 11 zur Erzeugung von Steuerungsbefehlen für die Automatisierungsanlage 2 aufweist, mit einer Steuerschnittstelle 7 zur Übergabe der Steuerungsbefehle an die Automatisierungsanlage 2, wobei die Steuerschnittstelle 7 mit der speicherprogrammierbaren Steuerung 5 datentechnisch verbunden ist, mit einer Messschnittstelle 6 zur Übernahme von Messdaten von einer Messeinrichtung 4, wobei die Messschnittstelle 6 mit der speicherprogrammierbaren Steuerung 5 datentechnisch verbunden ist, wobei die speicherprogrammierbare Steuerung 5 ein Auswertemodul 12 zur Erzeugung von Protokolldaten aus den Messdaten aufweist.

## Beschreibung

Die Erfindung betrifft eine Automatisierungsanordnung mit den Merkmalen des Oberbegriffs des Anspruchs 1. Die Erfindung betrifft des Weiteren ein Verfahren zum Betrieb der Automatisierungsanordnung sowie ein Computerprogramm.

Speicherprogrammierbare Steuerungen sind Geräte zur Steuerung oder Regelung einer Maschine oder einer Anlage, welche auf digitaler Basis programmiert werden. Speicherprogrammierbare Steuerungen kontrollieren beispielsweise Industrieroboter und setzen Bewegungsbahnen für Werkzeuge oder Bauteile um. In Abhängigkeit der Kinematik der Industrieroboter müssen eine Vielzahl von Achsen synchronisiert in Echtzeit angesteuert werden, so dass die speicherprogrammierbare Steuerung strenge Echtzeit-Anforderungen umsetzen müssen.

Die Druckschrift DE 2982111 U1, die wohl den nächstkommenden Stand der Technik betrifft, betrifft eine Batterieüberwachung-Ladevorrichtung für eine Batteriegruppe eines batteriebetriebenen Fahrzeugs mit einer Steuereinheit, wobei die Steuereinheit den Ladeprozess in Abhängigkeit von Messergebnissen aktiv beeinflusst. Die Steuereinheit ist als eine SIMATIC-PLC ausgebildet, welche somit einen durch ein Echtzeit-Messergebnis beeinflussten Kontrollkreis umsetzt.

Es ist eine Aufgabe der vorliegenden Erfindung, eine Automatisierungsanordnung vorzuschlagen, welche eine verbesserte Qualität umsetzt. Diese Aufgabe wird durch eine Automatisierungsanordnung mit den Merkmalen des Anspruchs 1, durch ein Verfahren mit den Merkmalen des Anspruchs 11 sowie durch ein Computerprogramm mit den Merkmalen des Anspruchs 12 umgesetzt. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Automatisierungsanordnung zur Automatisierung von Verfahren, insbesondere von industriellen Verfahren. Die Verfahren können als Fertigungsverfahren, Montageverfahren, Messverfahren, Prüfverfahren, Handhabungsverfahren etc. ausgebildet sein.

Die Automatisierungsanordnung weist eine speicherprogrammierbare Steuerung zur Steuerung einer Automatisierungsanlage auf. Die speicherprogrammierbare Steuerung kann in Kurzform bevorzugt als SPS oder als PLC bezeichnet werden. Insbesondere ist die speicherprogrammierbare Steuerung als eine digitale Datenverarbeitungseinrichtung ausgebildet und/oder weist insbesondere mindestens eine CPU auf.

Die Automatisierungsanlage weist mindestens einen Aktor auf und/oder ist insbesondere als ein Industrieroboter mit mindestens einer, einigen oder einer Mehrzahl von Achsen ausgebildet. Der Industrieroboter kann mit Greifern, Werkzeugen oder anderen Fertigungsmitteln ausgerüstet sein und kann die oben genannten Verfahren durchführen.

Die speicherprogrammierbare Steuerung weist ein Steuermodul zur Erzeugung von Steuerungsbefehlen für die Automatisierungsanlage auf. Das Steuermodul ist besonders bevorzugt als ein Softwaremodul ausgebildet. Die Steuerungsbefehle sind insbesondere als Echtzeit-Befehle realisiert.

Die Automatisierungsanordnung weist eine Steuerschnittstelle zur Übergabe der Steuerungsbefehle an die Automatisierungsanlage auf. Die Steuerschnittstelle ist mit der speicherprogrammierbaren Steuerung datentechnisch verbunden, so dass die Steuerungsbefehle in der speicherprogrammierbaren Steuerung erzeugt werden können und über die Steuerschnittstelle an die Automatisierungsanlage ausgegeben werden können.

Die Automatisierungsanordnung weist eine Messschnittstelle auf, welche zur Übernahme von Messdaten von einer Messeinrichtung ausgebildet ist. Die Messschnittstelle ist mit der speicherprogrammierbaren Steuerung datentechnisch verbunden, so dass die Messdaten von der Messeinrichtung über die Messschnittstelle an die speicherprogrammierbare Steuerung übertragen werden können. Die Messeinrichtung umfasst insbesondere mindestens einen oder einige Sensoren, wobei die Sensoren in einer allgemeinen Ausprägung der Erfindung beliebig ausgebildet sein können. Die Messdaten umfassen besonders bevorzugt Zustandsmess- und/oder Prozessmessdaten von dem Werkstück, den Werkzeugen, den Greifern und/oder von dem Fertigungsprozess und/oder dem Messprozess und/oder Handhabungsprozess. Beispielsweise können die Messdaten Prozessmessdaten von dem Fertigungsprozess oder Messdaten von einem Messprozess umfassen.

Im Rahmen der Erfindung wird vorgeschlagen, dass die speicherprogrammierbare Steuerung ein Auswertemodul zur Erzeugung von Protokolldaten aus den Messdaten aufweist. Die Protokolldaten können beispielsweise als ausgewertete und/oder zusammengefasste Messdaten ausgebildet sein.

Es ist dabei eine Überlegung der Erfindung, dass die Einspeisung von Messdaten in die speicherprogrammierbare Steuerung bislang ausschließlich genutzt wurde, um die Automatisierungsanlage gegebenenfalls sensorgestützt zu führen, wobei Steuerungen und/oder Regelungen auf Basis der Messdaten umgesetzt werden. Beispielsweise beeinflussen die Messdaten von der Steuereinheit aus dem Stand der Technik den weiteren Ladevorgang der Batterieeinheit.

Erfindungsgemäß wird vorgeschlagen, dass das Auswertemodul aus den Messdaten Protokolldaten erzeugt und bereitstellt. Damit ist es nicht nur möglich, Verfahren zu kontrollieren, sondern, insbesondere offline, die Verfahren zu protokollieren und damit im Rahmen des Qualitätsmanagement die Qualität des Verfahrens zu erhöhen. Es ist damit möglich, auf Basis der speicherprogrammierbaren Steuerung die Grundlagen für einen Qualitätsregelkreis zu schaffen und/oder erforderliche Qualitätsdaten zu sammeln. Bislang war es üblich, derartige Protokolldaten mit einer zweiten Einrichtung, zum Beispiel mit einer separaten Messeinrichtung, zunächst als Messdaten zu erfassen und nachfolgend als Protokolldaten zu speichern. Damit musste bei einer typischen Automatisierungsanlage nicht nur die speicherprogrammierbare Steuerung, sondern ergänzend die Messapparatur bereitgestellt werden. Durch die Integration einer Protokollfunktion in die speicherprogrammierbare Steuerung kann auf die separate Meßapparatur zu Qualitätszwecken verzichtet werden, so dass die vorgeschlagene Automatisierungsanordnung eine höhere Qualität bei geringeren Anlagekosten umsetzen kann. Ferner werden die Protokollfunktion und die eigentliche Steuerungsfunktion in einer gemeinsamen speicherprogrammierbaren Steuerung umgesetzt, so dass bei der Inbetriebnahme der Automatisierungsanordnung nur in einer Programmierumgebung für beide Funktionen gearbeitet werden kann. Im Ergebnis kann damit der Betrieb der Automatisierungsanordnung durch die Zusammenfassung der Funktionen in der speicherprogrammierbaren Steuerung vereinfacht werden. Betrachtet man wirtschaftliche Aspekt der Erfindung, so muss unter Verwendung der erfindungsgemäßen Automatisierungsanordnung nur noch eine Softwareumgebung, nämlich die Softwareumgebung für die speicherprogrammierbare Steuerung, und nicht mehr zwei unterschiedliche Softwareumgebungen für die Steuerungsfunktion und die Protokollfunktion gekauft/gemietet, geführt und gewartet werden.

Bei einer bevorzugten Weiterbildung der Erfindung weist die speicherprogrammierbare Steuerung ein Ablagemodul zur Ablage der Protokolldaten in einem vorzugsweise externen Speicher auf. Diese Weiterbildung eröffnet die Möglichkeit, dass die speicherprogrammierbare Steuerung nicht nur die Protokolldaten erzeugt, sondern diese auch in einem Speicher zu Dokumentationszwecken legen kann.

Zur Integration in das Qualitätsmanagement ist es bevorzugt, dass die Protokolldaten in einer .DFD-Datei abgelegt werden. Die .DFQ-Datei umfasst dabei Merkmale des Prozesses und entsprechende Protokolldaten zu den Merkmalen, wie zum Beispiel Trends, Abweichungen, Warnungen etc.

Es ist bevorzugt, dass die Automatisierungsanordnung eine Anzeigevorrichtung zur Anzeige von Steuervorgängen der speicherprogrammierbaren Steuerung aufweist. Beispielsweise wird auf der Anzeigevorrichtung Achsstellungen, Verfahrensabläufe etc. gezeigt. Die Anzeigevorrichtung ist mit der speicherprogrammierbaren Steuerung datentechnisch verbunden, so dass die speicherprogrammierbare Steuerung entsprechende Steueranzeigedaten erzeugen kann und an die Anzeigevorrichtung übertragen kann.

Bei einer Weiterbildung ist es bevorzugt, dass die speicherprogrammierbare Steuerung ein Anzeigemodul zur Erzeugung von Protokollanzeigedaten zu den Protokolldaten aufweist. Es ist schaltungstechnisch und/oder programmtechnisch vorgesehen, dass die Protokollanzeigedaten auf der Anzeigevorrichtung darstellbar sind. Diese Weiterbildung ermöglicht es, dass nicht nur im Hintergrund der speicherprogrammierbaren Steuerung entsprechende Protokolldaten erzeugt sind, sondern dass die Protokolldaten besonders bevorzugt in Echtzeit auf der Anzeigevorrichtung darstellbar sind. Dies ermöglicht es einem Nutzer der Automatisierungsanordnung, Abweichungen in dem laufenden Prozess, welche durch die Protokolldaten erkennbar sind, zu erkennen und in den laufenden Prozess korrigierend einzugreifen.

Bei einer bevorzugten Ausgestaltung der Automatisierungsanordnung umfasst diese die Automatisierungsanlage und die Messeinrichtung, wobei die Messeinrichtung Messdaten von der Automatisierungsanlage aufnimmt.

In einer bevorzugten, konkreten Ausgestaltung der Erfindung wird beansprucht, dass die speicherprogrammierbare Steuerung zu der SIMATIC-Familie gehört. Diese SIMATIC-Familie ist ein Produkt der Siemens AG und bildet einen industriellen Standard für speicherprogrammierbare Steuerungen. Besonders bevorzugt ist die speicherprogrammierbare Steuerung als eine S7, insbesondere eine S7-1500, oder als ein Nachfolgemodell ausgebildet.

Bei einer Umsetzung der Erfindung ist es bevorzugt, dass eine datentechnische Verbindung zwischen der speicherprogrammierbaren Steuerung und der Automatisierungsanlage und/oder zwischen der speicherprogrammierbaren Steuerung und der Messschnittstelle und/oder zwischen der speicherprogrammierbaren Steuerung und dem externen Speicher und/oder zwischen der speicherprogrammierbaren Steuerung und der Anzeigevorrichtung zumindest abschnittsweise oder vollständig über ein Netzwerk, insbesondere über einen Profibus erfolgt. Der Profibus ist ebenfalls ein etablierter Standard und erlaubt den echtzeitfähigen Austausch von Steuerdaten, Messdaten, Anzeigedaten und/oder weiteren Daten.

Bei einer bevorzugten Ausgestaltung der Erfindung weist die Automatisierungsanordnung eine Bibliothek auf, wobei die Bibliothek einen integralen Bestandteil der speicherprogrammierbaren Steuerung bilden oder auf einer separaten, digitalen Datenverarbeitungseinrichtung gespeichert sein kann. Das Auswertemodul und/oder das Ablagemodul und/oder das Steuermodul ist bzw. sind jeweils als ein Bibliotheksbaustein und/oder SPS-Baustein in der Bibliothek ausgebildet. Derartige Bibliotheksbausteine vereinfachen die Programmierung der speicherprogrammierbaren Steuerung, da die Grundfunktionen in den Bibliotheksbausteinen bereits programmiert sind, welche nur noch parametrisiert und/oder angepasst werden müssen. Damit fügen sich das Auswertemodul und/oder das Ablagemodul datentechnisch in übliche Programmierumgebung der speicherprogrammierbaren Steuerung ein. Insbesondere ist die Bibliothek als Teil des TIA Portals V14 SP1 der Siemens AG ausgebildet.

Ein weiterer Gegenstand der Erfindung betrifft ein Verfahren zum Betrieb der Automatisierungsanordnung nach einem der vorhergehenden Ansprüche, wobei vorgesehen ist, dass das Steuermodul während eines laufenden Prozesses mit dem Auswertemodul und/oder dem Protokollmodul arbeitet, so dass während des Prozesses sowohl die Steuerdaten als auch die Protokolldaten bereitstellt werden können. Besonders bevorzugt ist vorgesehen, dass die Steuerdaten eine höhere Priorität als die Protokolldaten einnehmen, da die Steuerdaten eine höhere Echtzeitanforderung als die Protokolldaten habe.

Ein weiterer Gegenstand der Erfindung betrifft ein Computerprogramm mit Programmcodemitteln, wobei das Computerprogramm ausgebildet ist, das zuvor beschriebene Verfahren auf der Automatisierungsanordnung durchzuführen, wie diese zuvor beschrieben wurde.

Weitere Merkmale, Vorteile und Wirkung der Erfindung ergeben sich aus der nachfolgenden Beschreibung eines bevorzugten Ausführungsbeispiels der Erfindung sowie der beigefügten Figuren. Dabei zeigen:

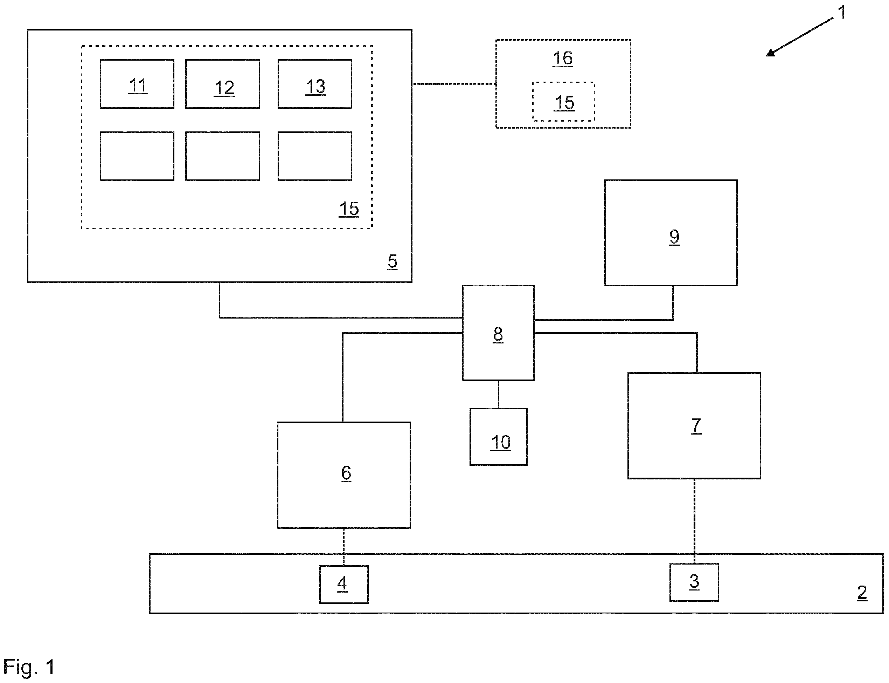

Figur 1 ein schematisches Blockdiagramm der Automatisierungsanordnung als ein Ausführungsbeispiel der Erfindung.

Die Figur 1 zeigt eine Automatisierungsanordnung 1 als ein Ausführungsbeispiel der Erfindung. Die Automatisierungsanordnung 1 kann eine vollautomatisierte oder als eine teilautomatisierte Meßanlage ausgebildet sein. Die Automatisierungsanordnung 1 weist eine Automatisierungsanlage 2 auf, wobei die Automatisierungsanlage 2 mindestens eine Aktorik, wie zum Beispiel eine Achse, aufweist. Die Automatisierungsanlage 2 kann beispielsweise einen Industrieroboter 3 aufweisen, welcher ein Handhabungsverfahren, ein Messverfahren, ein Fertigungsverfahren oder dergleichen umsetzt.

Die Automatisierungsanlage 2 weist eine Messeinrichtung 4 auf, wobei die Messeinrichtung 4 Sensoren aufweist, welche eine Meßaufgabe in dem jeweiligen Verfahren umsetzen. Die Messeinrichtung 4 ist insbesondere dazu ausgebildet, Messdaten aufzunehmen, welche den jeweiligen Prozess, das jeweilige Werkstück oder Prüfstück beschreiben. Insbesondere ist die Messeinrichtung 4 zusätzlich zu dem Industrieroboter 3 ausgebildet, so dass es sich um eine zusätzliche Messeinrichtung 4 handelt.

Die Automatisierungsanordnung 1 weist eine speicherprogrammierbare Steuerung 5 auf, wobei die speicherprogrammierbare Steuerung 5 sowohl eine Steuerfunktion für den Industrieroboter 3 oder allgemeiner für die Automatisierungsanlage 2 und zudem eine Protokollfunktion für das jeweilige Verfahren umsetzt.

Die Automatisierungsanordnung 1 weist eine Messschnittstelle 6 auf, welche datentechnisch mit der Messeinrichtung 4 verbunden und/oder verbindbar ist. Über die Messschnittstelle 6 kann die Messeinrichtung 4 Messdaten übergeben. Desweiteren ist die Messschnittstelle 6 datentechnisch mit der speicherprogrammierbaren Steuerung 5 verbunden, so dass die Messdaten an die speicherprogrammierbare Steuerung 5 weitergeleitet werden können.

Ferner weist die Automatisierungsanordnung 1 eine Steuerschnittstelle 7 auf, wobei die speicherprogrammierbare Steuerung 5 über die Steuerschnittstelle 7 Steuerbefehle an die Automatisierungsanlage 2, insbesondere an den Industrieroboter 3, übergeben werden kann. Somit ist die Steuerschnittstelle 7 mit der Automatisierungsanlage 2, insbesondere mit dem Industrieroboter 3, datentechnisch verbunden. Ferner ist die Steuerschnittstelle 7 mit der speicherprogrammierbaren Steuerung 5 datentechnisch verbunden.

Die Kommunikation zwischen der speicherprogrammierbaren Steuerung 5 und der Messschnittstelle 6 und/oder der Steuerschnittstelle 7 erfolgt über eine Busverbindung 8, wobei die Busverbindung 8 durch einen Profibus umgesetzt ist. Beispielsweise sind die speicherprogrammierbare Steuerung 5, die Messschnittstelle 6 und die Steuerschnittstelle 7 im Netzwerk über einen Switch miteinander verbunden. Optional kann vorgesehen sein, dass auch die Kommunikation zwischen der Messschnittstelle 6 und der Messeinrichtung 4 und/oder die Kommunikation zwischen der Steuerschnittstelle 7 und der Automatisierungsanlage 2, insbesondere dem Industrieroboter 3, über die Busverbindung 8 und/oder den Profibus erfolgt.

Die Automatisierungsanordnung 1 weist eine Anzeigevorrichtung 9 auf, wobei die Anzeigevorrichtung 9 wahlweise über die Busverbindung 8 oder unmittelbar mit der speicherprogrammierbaren Steuerung 5 datentechnisch verbunden ist. Die Anzeigevorrichtung 9 bildet eine Anzeige für einen Nutzer der Automatisierungsanordnung 1.

Die Automatisierungsanordnung 1 weist einen Speicher 10 auf, wobei der Speicher 10 zum Beispiel über die Busverbindung 8 oder auch über eine andere Datenverbindung mit der speicherprogrammierbaren Steuerung 5 datentechnisch verbunden ist. Der Speicher 10 kann als ein flüchtiger oder nicht-flüchtiger Speicher ausgebildet sein, beispielsweise ist der Speicher 10 als eine Festplatte oder dergleichen realisiert.

Die speicherprogrammierbare Steuerung 5 weist ein Steuermodul 11 zur Erzeugung von Steuerbefehlen für die Automatisierungsanlage 2, insbesondere für den Industrieroboter 3, auf. Insbesondere werden über die Steuerbefehle die mindestens eine Achse oder die mehreren Achsen der Automatisierungsanlage 2, insbesondere des Industrieroboters 3, während des Verfahrens in Echtzeit gesteuert.

Ferner weist die speicherprogrammierbare Steuerung ein Auswertemodul 12 auf, wobei das Auswertemodul 12 ausgebildet ist, aus Messdaten von der Messeinrichtung 4, welche über die Messschnittstelle 6 an die speicherprogrammierbare Steuerung 5 übertragen werden, Protokolldaten zu erzeugen. Die Protokolldaten basieren auf den Messdaten und umfassen die Messdaten oder abgeleitete Daten aus den Messdaten als Protokolldaten.

Optional umfasst die speicherprogrammierbare Steuerung 5 ein Ablagemodul 13, wobei das Ablagemodul 13 ausgebildet ist, die Protokolldaten vorzugsweise über die Busverbindung 8 in dem Speicher 10 abzulegen.

In dieser Konstellation nimmt die speicherprogrammierbare Steuerung 5 neben der sonst üblichen Steuerfunktion für die Automatisierungsanlage 2, insbesondere für den Industrieroboter 3, eine Protokollfunktion ein, wobei Protokolldaten zu dem laufenden Prozess oder Verfahren in der Automatisierungsanlage 2 erzeugt und in dem Speicher 10, insbesondere zu Dokumentationszwecken, abgelegt werden. Die Protokolldaten können beispielsweise in der Form einer .qfd-Datei abgelegt werden.

Ferner weist die speicherprogrammierbare Steuerung ein Anzeigemodul 14 auf, wobei das Anzeigemodul 14 ausgebildet ist, die Protokolldaten als Protokollanzeigedaten an die Anzeigevorrichtung 9 zu übertragen, so dass die Protokollanzeigedaten in der Anzeigevorrichtung 9 dargestellt werden können.

Programmtechnisch ist vorgesehen, dass das Steuermodul 11, das Auswertemodul 12, das Ablagemodul 13, das Anzeigemodul 14 als Bibliotheksbausteine und/oder SPS-Bausteine in einer Bibliothek 15 als nutzbare Bausteine bereitgestellt sind. Zudem können weitere Funktionen in der Bibliothek 15 vorgesehen sein, die der graphischen Aufbereitung und insbesondere die Erstellung der Protokollanzeigedaten. Insbesondere ist die Bibliothek 15 als Teil der TIA Portal V14 SP1 ausgebildet. Die Bibliothek 15 kann in der speicherprogrammierbaren Steuerung 5 angeordnet sein. Alternativ hierzu ist es möglich, dass eine zusätzliche Programmiereinrichtung 16 vorgesehen ist, welche zur Programmierung der speicherprogrammierbaren Steuerung 5 dient und welche die Bibliothek 15 hält. Es ist jedoch auch möglich, dass die Bibliothek 15 in der speicherprogrammierbaren Steuerung 5 angeordnet ist und die speicherprogrammierbare Steuerung 5 beispielsweise über die Anzeigevorrichtung 9 programmiert werden kann, wobei die Anzeigevorrichtung 9 in dieser Ausgestaltung eine Anzeige- und Bedienvorrichtung ist. Beispielsweise ist die Anzeigevorrichtung 9 als ein Panel mit einer Touchfunktion ausgebildet.

### Bezugszeichen

- 1: Automatisierungsanordnung
- 2: Automatisierungsanlage
- 3: Industrieroboter
- 4: Messeinrichtung
- 5: speicherprogrammierbare Steuerung
- 6: Messschnittstelle
- 7: Steuerschnittstelle
- 8: Busverbindung
- 9: Anzeigevorrichtung
- 10: Speicher
- 11: Steuermodul
- 12: Auswertemodul
- 13: Ablagemodul
- 14: Anzeigemodul
- 15: Bibliothek
- 16: Programmiereinrichtung

## Patentansprüche

1. Automatisierungsanordnung (1)
mit einer speicherprogrammierbaren Steuerung (5) zur Steuerung einer Automatisierungsanlage (2),
wobei die speicherprogrammierbare Steuerung (5) ein Steuermodul (11) zur Erzeugung von Steuerungsbefehlen für die Automatisierungsanlage (2) aufweist,
mit einer Steuerschnittstelle (7) zur Übergabe der Steuerungsbefehle an die Automatisierungsanlage (2), wobei die Steuerschnittstelle (7) mit der speicherprogrammierbaren Steuerung (5) datentechnisch verbunden ist,
mit einer Messschnittstelle (6) zur Übernahme von Messdaten von einer Messeinrichtung (4), wobei die Messschnittstelle (6) mit der speicherprogrammierbaren Steuerung (5) datentechnisch verbunden ist,
**dadurch gekennzeichnet, dass**
die speicherprogrammierbare Steuerung (5) ein Auswertemodul (12) zur Erzeugung von Protokolldaten aus den Messdaten aufweist.

2. Automatisierungsanordnung (1) nach Anspruch 1, **dadurch gekennzeichnet, dass** die speicherprogrammierbare Steuerung (5) ein Ablagemodul (13) zur Ablage der Protokolldaten in einem Speicher (10) aufweist.

3. Automatisierungsanordnung (1) nach Anspruch 2, **dadurch gekennzeichnet, dass** die Protokolldaten in einer .qfd-Datei in dem Speicher (10) abgelegt sind.

4. Automatisierungsanordnung (1) nach einem der vorhergehenden Ansprüche, **gekennzeichnet durch** eine Anzeigevorrichtung (9) zur Anzeige von Steuervorgängen der speicherprogrammierbaren Steuerung (5), wobei die Anzeigevorrichtung (9) mit der speicherprogrammierbaren Steuerung (5) datentechnisch verbunden ist.

5. Automatisierungsanordnung (1) nach Anspruch 4, **dadurch gekennzeichnet, dass** die speicherprogrammierbare Steuerung (5) ein Anzeigemodul (14) zur Erzeugung von Protokollanzeigedaten zu den Protokolldaten aufweist, wobei die Protokollanzeigedaten auf der Anzeigevorrichtung (9) darstellbar sind.

6. Automatisierungsanordnung (1) nach einem der vorhergehenden Ansprüche, **gekennzeichnet durch** die Automatisierungsanlage (2) und die Messeinrichtung (4), wobei die Messeinrichtung (4) Messdaten von der Automatisierungsanlage (2) aufnimmt.

7. Automatisierungsanordnung (1) nach einem der vorhergehenden Ansprüche, **dadurch gekennzeichnet, dass** die speicherprogrammierbare Steuerung (5) zu der Simatic-Familie gehört.

8. Automatisierungsanordnung (1) nach einem der vorhergehenden Ansprüche, **dadurch gekennzeichnet, dass** die datentechnische Verbindung zwischen der speicherprogrammierbaren Steuerung (5) und der Automatisierungsanlage (2) und/oder zwischen der speicherprogrammierbaren Steuerung (5) und der Messschnittstelle (6) und/oder zwischen der speicherprogrammierbaren Steuerung (5) und dem externen Speicher und/oder zwischen der speicherprogrammierbaren Steuerung und der Anzeigevorrichtung (9) zumindest abschnittsweise oder vollständig über einen Profibus erfolgt.

9. Automatisierungsanordnung (1) nach Anspruch 8, **dadurch gekennzeichnet, dass** die speicherprogrammierbare Steuerung (5) als eine S7-1500 ausgebildet ist.

10. Automatisierungsanordnung (1) nach einem der vorhergehenden Ansprüche, **gekennzeichnet durch** ein Bibliothek (15), wobei das Steuermodul (11), das Auswertemodul (12), das Ablagemodul (13) und/oder das Anzeigemodul (14) als ein Bibliotheksbaustein und/oder als ein SPS-Baustein in der Bibliothek (15) ausgebildet ist bzw. sind.

11. Verfahren zum Betrieb der Automatisierungsanordnung (1) nach einem der vorhergehenden Ansprüche, wobei vorgesehen ist, dass das Steuermodul (11) während eines laufenden Prozesses mit dem Auswertemodul (12) und/oder mit dem Ablagemodul (13) arbeitet, so dass während des Prozesses sowohl die Steuerdaten als auch die Protokolldaten bereitstellt werden können.

12. Computerprogramm mit Programmcode-Mitteln, um alle Schritte gemäß Anspruch 11 durchzuführen, wenn das Programm auf einem Computer und/oder Automatisierungsanordnung (1) nach einem der Ansprüche 1 bis 10 ausgeführt wird.
